**Europäisches Patentamt**

**European Patent Office**

**Office européen des brevets**

(19)

(11) **EP 1 462 777 A1**

(12) **EUROPÄISCHE PATENTANMELDUNG**

(43) Veröffentlichungstag:
**29.09.2004 Patentblatt 2004/40**

(51) Int Cl.⁷: **G01H 3/08**

(21) Anmeldenummer: **03100787.5**

(22) Anmeldetag: **26.03.2003**

(84) Benannte Vertragsstaaten:
**AT BE BG CH CY CZ DE DK EE ES FI FR GB GR
HU IE IT LI LU MC NL PT SE SI SK TR**
Benannte Erstreckungsstaaten:
**AL LT LV MK RO**

(71) Anmelder: **Ford Global Technologies, Inc.,
A subsidiary of Ford Motor Company
Dearborn, Michigan 48126 (US)**

(72) Erfinder:
• **Heinrichs, Ralf
  50859, Koeln (DE)**

• **Bodden, Markus
  45131, Essen (DE)**
• **Leonhard, Torsten
  41539, Dormagen (DE)**

(74) Vertreter: **Drömer, Hans-Carsten, Dr.-Ing. et al
Ford-Werke Aktiengesellschaft,
Patentabteilung NH/DRP,
Henry-Ford-Strasse 1
50725 Köln (DE)**

(54) **Verfahren und Vorrichtung zur quantitativen Analyse von Motorgeräuschen**

(57) Die Erfindung betrifft ein Verfahren zur Analyse eines Motorgeräusches, wobei ein Zeitverlauf p(k) des gemessenen Geräusches zunächst in überlappenden Zeitfenstern einer Kurzzeitfrequenzanalyse unterworfen wird. Die hierbei erhaltenen Kurzzeitfrequenzspektren P(n, l) werden für jede Trägerfrequenz n wiederum als ein zeitliches Trägersignal aufgefaßt, dessen Modulationsfrequenzspektrum $P_m(n, m)$ berechnet werden kann. In den Modulationsfrequenzspektren zeigen sich dann charakteristische Merkmale für impulsartige Anteile des Motorgeräusches, insbesondere eines Dieselgeräusches. Diese können durch die Berechnung eines Geräuschindexes weiter quantitativ erfaßt oder durch Filtern des Modulationsfrequenzspektrums gezielt unterdrückt oder angehoben werden.

**Fig. 1**

**Beschreibung**

Die Erfindung betrifft ein Verfahren sowie eine Vorrichtung zur quantitativen Analyse der Geräusche eines Verbrennungsmotors, insbesondere eines Dieselmotors.

Bei der Auslegung eines Verbrennungsmotors - wie beispielsweise eines Benzinmotors mit Direkteinspritzung und Funkenzündung oder insbesondere eines Dieselmotors - spielt die Minimierung von Geräuschemissionen eine zunehmend wichtige Rolle. Die Motorgeräusche entstehen typischerweise durch Verbrennungsgeräusche und Geräusche des Injektors. Um die Konstruktion von Verbrennungsmotoren gezielt hinsichtlich der Geräuschminimierung verbessern zu können, ist eine zuverlässige und reproduzierbare quantitative Analyse von Motorgeräuschen wichtig. Dieses Ziel wird durch die bisher bekannten Analyseverfahren für Motorgeräusche nicht in befriedigendem Maße erreicht. Insbesondere ist keine adäquate Beschreibung für die impulsartigen Anteile der Verbrennungsgeräusche, die den menschlichen Höreindruck gerade bei Dieselmotoren prägen, bekannt ("Nageln").

Vor diesem Hintergrund war es eine Aufgabe der vorliegenden Erfindung, Mittel zur adäquaten quantitativen Analyse von Motorgeräuschen bereitzustellen, welche eine objektive Bewertung eines Motorgeräusches ermöglichen, die zudem vorzugsweise eine hohe Korrelation zur menschlichen Beurteilung des Geräusches aufweist.

Diese Aufgabe wird durch ein Verfahren mit den Merkmalen des Anspruchs 1 sowie durch eine Vorrichtung mit den Merkmalen des Anspruchs 10 gelöst.

Vorteilhafte Ausgestaltungen sind in den Unteransprüchen enthalten.

Das erfindungsgemäße Verfahren zur quantitativen Analyse der Geräusche eines Verbrennungsmotors - wie insbesondere eines Dieselmotors - enthält die folgenden Schritte:

a) Aufzeichnung des Geräusch-Signalverlaufes $p(k)$, $0 \leq k \leq K$, über eine vorgegebene Aufzeichnungsdauer K. Der Signalverlauf p kann dabei z. B. den Schalldruckpegel beschreiben und mit Hilfe eines Mikrofons gemessen werden. Die Zeitvariablen k, K können sowohl kontinuierlich als auch - wie im Rahmen der Erfindung bevorzugt - diskret sein.

b) Ermittlung von Kurzzeit-Frequenzspektren $P(n, l)$ für den gesamten Signalverlauf $p(k)$, $0 \leq k \leq K$. Jedes der Kurzzeit-Frequenzspektren stellt das Spektrum des Signalverlaufes $p(k)$ in einem im Vergleich zur Aufzeichnungsdauer K kurzen Zeitfenster der Breite $N < K$ dar, wobei das Zeitfenster bei einem Zeitpunkt $k_l$ aus dem Intervall der Aufnahmedauer liegt (d.h. $0 \leq k_l \leq K$), und wobei l ein Index ist ($0 \leq l \leq L$). Der Zeitpunkt $k_l$ stellt dabei eine die Lage des Zeitfensters beschreibende Zeitmarke dar, beispielsweise den Mittelpunkt des Zeitfensters oder einen definierten Randpunkt des Zeitfensters. Die Berücksichtigung des "gesamten" Signalverlaufes bedeutet, daß die Zeitfenster derart gewählt und gelegt werden, daß diese den Signalverlauf lückenlos - gegebenenfalls sogar mit Überlappungen - überdecken. Ein Wert $P(n, l)$ beschreibt den Anteil der Frequenz n am Signalverlauf p innerhalb des bei $k_l$ gelegenen Zeitfensters.

c) Ermittlung der Modulationsfrequenzspektren $P_m(n, m)$ zu den vorstehend genannten Kurzzeit-Frequenzspektren $P(n, l)$. Für jede gegebene Frequenz $n_0$ können die zugehörigen betragsmäßigen Anteile $|P(n_0, l)|$ als ein Trägersignal über der Variablen $0 \leq l \leq L$ betrachtet werden, welches spektral analysiert werden kann. Das Ergebnis dieser Spektralanalyse stellt dann das Modulationsfrequenzspektrum $P_m(n_0, m)$ dar, wobei die Werte $P_m(n_0, m)$ den zur Modulationsfrequenz m gehörenden Anteil des bei der Frequenz $n_0$ gebildeten Trägersignals $|P(n_0, l)|$ darstellen.

Das beschriebene Verfahren beruht somit auf einer zweistufigen Spektralanalyse des Motorgeräusches. Bei der ersten Spektralanalyse werden Kurzzeit-Frequenzspektren in verschiedenen Zeitfenstern entlang des Signalverlaufes berechnet. Die verschiedenen Frequenzkanäle dieser Kurzzeit-Frequenzspektren werden sodann jeweils als ein zeitliches Trägersignal aufgefaßt, welches einer zweiten Spektralanalyse unterworfen werden kann, um ein Modulationsfrequenzspektrum zu berechnen. Es zeigt sich, daß die Gesamtheit der so bestimmten Modulationsfrequenzspektren eine hohe Aussagekraft in Bezug auf die Qualität des Motorgeräusches aufweist. Insbesondere lassen die Modulationsfrequenzspektren impulsartige Anteile des Motorgeräusches stark hervortreten, so daß diese einer quantitativen Bestimmung und weiteren Verarbeitungsschritten - wie beispielsweise einer Ursachenanalyse - zugänglich werden. Bereits aus der graphischen Darstellung der Modulationsfrequenzspektren wird der Impulsanteil der Motorgeräusche für einen Betrachter auffällig sichtbar. Wie nachstehend im Rahmen der Figurenbeschreibung detaillierter erläutert, äußern sich impulsartige Geräuschanteile in signifikanten Modulationen der Modulationsfrequenzspektren, wobei die folgenden Größen wichtig für den Höreindruck der impulsartigen Anteile sind:

- Zahl und Art der Modulationen;

- Modulationsstärke (Amplitude, z. B. ausgedrückt als Helligkeit in einer farblichen Wiedergabe der Modulationsfrequenzspektren);

- Modulationsbandbreite;

- Trägerfrequenzbandbreite;

- Trägerfrequenzenergie (mittleres Spektrum).

Die im Rahmen der Erfindung vorgeschlagene Geräuschanalyse erlaubt eine objektive Beschreibung des wahrgenommenen Impulsanteils des Motorgeräusches und somit auch eine Vorhersage der Geräuschbeurteilung durch einen Kunden. Ferner sind mit Hilfe der Analyse objektive Zielvorgaben für das gesamte Fahrzeug beziehungsweise für Untersysteme des Fahrzeuges möglich. Schließlich wird es mit Hilfe der erfindungsgemäßen Geräuschanalyse möglich, die hauptverantwortlichen Komponenten und die Entstehungsursachen (Quellen und Ausbreitungspfade) der impulsartigen Geräuschanteile zu identifizieren.

Das Verfahren kann grundsätzlich an kontinuierlichen Signalverläufen mit Hilfe von kontinuierlichen Spektralanalysen durchgeführt werden. Vorzugsweise erfolgt indes die Aufzeichnung und Analyse des Signalverlaufes p(k) zeitdiskret. In diesem Falle kann das Verfahren mit Hilfe von leistungsstarken Algorithmen auf einer elektronischen Datenverarbeitungseinheit ausgeführt werden. Im Folgenden wird daher überwiegend davon ausgegangen, daß eine zeitdiskrete Formulierung des Verfahrens vorliegt, wobei sich die Ausführungen in der Regel jedoch analog auf zeitkontinuierliche Ausführungsformen übertragen lassen und die Erfindung diesbezüglich nicht eingeschränkt sein soll.

Gemäß einer bevorzugten Ausführungsform des Verfahrens werden die Kurzzeit-Frequenzspektren P(n, l) mittels einer Diskreten Fourier-Transformation (DFT) gewonnen (in der kontinuierlichen Verfahrensvariante würde an deren Stelle eine kontinuierliche Fourier-Transformation treten). Diese läßt sich durch die folgende Formel beschreiben:

$$P(n,l)\Big|_{l=0}^{L} = \sum_{k=l\,N(1-O)}^{l\,N(1-O)+(N-1)} p(k) \cdot w(k - l\,N\,(1-O)) \cdot e^{-j\frac{2\pi kn}{N}} \Big|_{l=0}^{L} .$$

Darin bedeutet die Größe O (mit $0 \leq O \leq 1$) ein Maß für den Überlapp der Zeitfenster, in denen die Kurzzeit-Frequenzspektren bestimmt werden, wobei O = 0 keinen Überlapp und O = 1 einen 100%igen Überlapp bedeutet. Die Größe w ist eine Fensterfunktion, die dazu dient, aus dem Signalverlauf p(k) ein Fenster der gewünschten Breite N auszuschneiden. An den Rändern des Fensters sollte dabei möglichst ein sanftes Ausblenden des Signalverlaufes erfolgen, was z. B. durch ein Hanning-Fenster der Breite N (d.h. die Funktion w(n) = (1-cos(2πn/N))/2, $-N/2 \leq n \leq N/2$) sehr gut erreicht wird.

Auch die Modulationsfrequenzspektren $P_m(n, m)$ werden vorzugsweise durch eine diskrete Fourier-Transformation gewonnen, welche sich durch die Formel

$$P_m(n,m)\Big|_{n=0}^{N} = \sum_{l=0}^{M-1} \Big|P(n,l)\Big| \cdot w(l) \cdot e^{-j\frac{2\pi l\,m}{M}} \Big|_{n=0}^{N}$$

beschreiben läßt. Hierin bedeutet w eine Fensterfunktion der Breite M, bei der es sich vorzugsweise ebenfalls um ein Hanning-Fenster handelt.

Gemäß einer bevorzugten Weiterbildung der Erfindung wird aus den Modulationsfrequenzspektren $P_m(n, m)$ ein Modulationsindex $P_{mi}(n, m)$ berechnet gemäß der folgenden Formel:

$$P_{mi}(n,m)\bigg|_{n=0}^{N} = 2\frac{|P_m(n,m)|}{|P_m(n,0)|} = 2\frac{\left|\sum_{l=0}^{M-1}|P(n,l)|\cdot w(l)\cdot e^{-j\frac{2\pi lm}{M}}\right|}{\left|\sum_{l=0}^{M-1}|P(n,l)|\cdot w(l)\right|}\Bigg|_{n=0}^{N}.$$

Der Modulationsindex gibt an, wie stark die jeweilige Trägerfrequenz n bei den einzelnen Modulationsfrequenzen m moduliert ist, und liefert damit ein Maß für die Ausgeprägtheit der zeitlichen Struktur. Der Betrag des Modulationsfrequenzspektrums wird dabei auf dessen Gleichanteile $P_m(n,0)$ normiert. Es zeigt sich, daß der Modulationsindex vor allem für die Erkennung und Beschreibung der typischen Dieselmotorgeräusche ("Dieselnageln") geeignet ist.

Insbesondere kann ein Geräuschindex aus den Werten des Modulationsindex $P_{mi}(n, m)$ in den Bereichen um die Modulationsfrequenzen m, die Vielfachen der halben Motorordnung entsprechen, berechnet werden. Die Motorordnung ist dabei definitionsgemäß eine auf die Motordrehzahl bezogene Größe. Je Kurbelwelle n-umdrehung werden 2 Zylinder gezündet bei einem 4 Zylinder Fahrzeug, was auch als Hauptordnung des Motors bezeichnet wird. Der Zusammenhang zwischen Motorordnung, Drehzahl und Frequenz lautet gemäß der folgenden Formel:

$$Motorordnung = \frac{Frequenz \cdot 60}{Drehzahl}$$

Des Weiteren wird bei der Berechnung des Geräuschindexes der mittlere Pegel der Motorgeräusche verwendet, um die Gesamtenergie der Modulation zu berücksichtigen. Durch den Geräuschindex gelingt es, stoßartige Anteile des Motorgeräusches durch eine einzige Zahl zu charakterisieren. Der Index ist daher insbesondere geeignet, um eine entsprechende Qualitätskontrolle auch bei der Produktion zu etablieren.

Vorzugsweise wird ein Geräuschindex DKI der vorstehend beschriebenen Art durch die folgende Formel berechnet:

$$DKI = \frac{M_{DKI}{}^{c} \cdot L_{fu\text{-}fl}}{N}$$

mit

$$M_{DKI} = \frac{1}{n_o}\sum_{i=0.5}^{O(step=0.5)} w_{eo} \cdot M_{i,o}$$

und

$$M_{i,o} = \frac{\sum\limits_{n_m=n_{m,o}-d_{nm}/2}^{n_m=n_{m,o}+d_{nm}/2}(w_m \cdot \overline{P}_{mi})}{\sum\limits_{n_m=n_{m,o}-d_{nm}/2}^{n_m=n_{m,o}+d_{nm}/2}w_m}$$

dabei sind

$o$ = Motorordnung
$O$ = höchste auszuwertende Motorordnung
$d_{nm}$ = Breite des Modulationsfensters
$W_m$ = Modulations - Fensterfunktion
$c$ = Constante gewonnen durch ein Optimalfit
$L_{fu-fl}$ = A gewichteter Gesamtpegel im Frequenzbereich $f_{L,l} \leq f \leq f_{L,u}$
$n_{fl}$ = Lower Trägerfrequenzgrenze
$n_{fu}$ = UpperTrägerfrequenzgrenze
$N$ = Normalisierungsfaktor
$n_o$ = Anzahl der halben untersuchten Motorordnung $O$
$n_m$ = Index der Modulationsfrequenz

Untersuchungen zeigen, daß ein in obiger Weise berechneter Geräuschindex DKI eine gute Korrelation mit der subjektiven Bewertung eines Motorgeräusches durch Testpersonen zeigt. Vorzugsweise wird diese Korrelation daher dazu ausgenutzt, den Geräuschindex mit Hilfe empirischer Daten an eine subjektive Bewertung des Motorgeräusches anzupassen, so daß mit hoher Genauigkeit aus rein technisch gewonnenen Messdaten auf die subjektive Beurteilung eines Geräusches geschlossen werden kann.

Gemäß einer anderen Weiterbildung des Verfahrens wird das Modulationsfrequenzspektrum $P_m(n, m)$ gefiltert und anschließend in einen (virtuellen) Signalverlauf rücktransformiert. Die Filterung kann insbesondere darin liegen, daß bestimmte Zonen des Modulationsfrequenzspektrums mit einem Faktor kleiner als Eins multipliziert werden. Auf diese Weise können gezielt die für Impulsanteile des Motorgeräusches verantwortlichen Anteile des Modulationsfrequenzspektrums unterdrückt werden, wobei sich der Erfolg dieses Vorgehens anhand des rekonstruierten Signalverlaufes durch eine Testperson beurteilen läßt. Eine derartige Modulationsfrequenzfilterung kann im Rahmen eines computerunterstützten Engineering (CAE) für eine Verbesserung der Motorkonstruktion verwendet werden. Ferner wird hierdurch die Festlegung einer Akzeptanzschwelle mit Hilfe objektiver Parameter ermöglicht.

Die Erfindung betrifft ferner eine Vorrichtung zur quantitativen Analyse des Geräusches eines Verbrennungsmotors, insbesondere eines Dieselmotors. Die Vorrichtung enthält eine Datenverarbeitungseinheit mit einem Speicher, in dem insbesondere ein gemessener Signalverlauf p(k) des zu analysierenden Geräusches gespeichert sein kann. Weiterhin ist die Datenverarbeitungseinheit dahingehend ausgebildet, ein Verfahren der vorstehend beschriebenen Art auszuführen. Dies kann insbesondere dadurch geschehen, daß das Verfahren implementierende Programme im Speicher der Datenverarbeitungseinheit abgelegt sind.

Im Folgenden wird die Erfindung mit Hilfe der Figuren beispielhaft näher erläutert. Es zeigen:

Fig. 1      das Prinzip der Berechnung von Modulationsfrequenzspektren aus Kurzzeitfrequenzspektren eines Signalverlaufes;

Fig. 2      einen stilisierten (oben) und einen real berechneten (unten) zeitlichen Verlauf des Betrags eines Kurzzeitspektrums;

Fig. 3      ein stilisiertes (oben) und ein real berechnetes (unten) Modulationsfrequenzspektrum zu dem Kurzzeit-Spektrum von Figur 2;

Fig. 4      den Modulationsindex eines schwach (oben) und eines stärker (unten) modulierten Signalverlaufes;

Fig. 5      einen Signalverlauf (links), das zugehörige Kurzzeitfrequenzspektrum (Mitte), und das Modulationsfrequenzspektrum (rechts) mit einem darin eingetragenen Modulationsfilter;

Fig. 6      den Modulationsindex eines Dieselgeräusches mit markierten Modulationsfrequenzen bei Vielfachen der halben Motorordnung;

Fig. 7      eine Gegenüberstellung zwischen der Beurteilung eines Dieselgeräusches durch Versuchspersonen (horizontale Achse) und einem berechneten Geräuschindex (vertikale Achse).

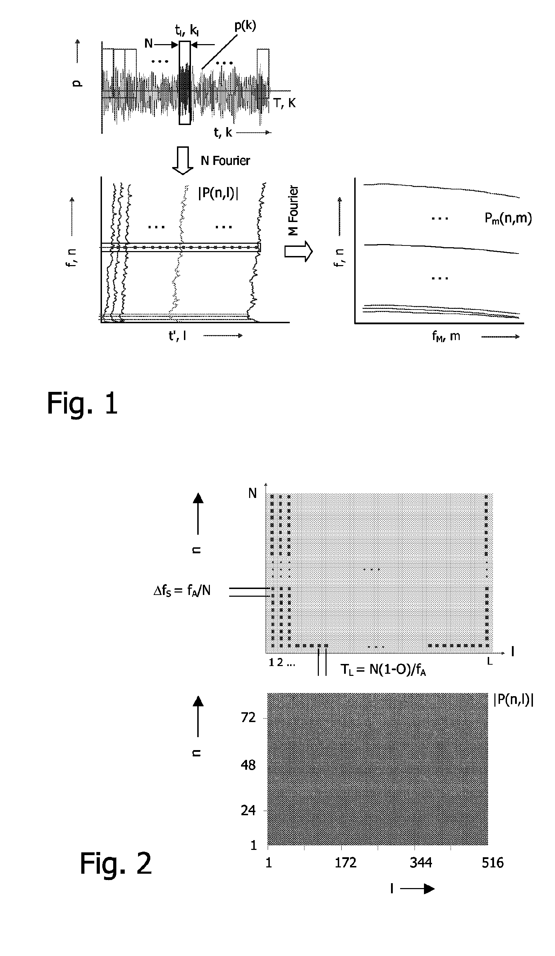

In der nachfolgenden Beschreibung wird das erfindungsgemäße Verfahren auch als "Narrow Band Modulation Analysis" (NBMA) bezeichnet. Figur 1 zeigt das Prinzip dieses NBMA Verfahrens anhand der Analyse des Zeitverlaufes eines aufgenommenen Motorgeräusches der Amplitude p. Hierbei kann es sich z. B. um das Leerlaufgeräusch des Motors für eine Dauer von T = 3 s handeln. Alternativ zur kontinuierlichen Beschreibung mit der Zeitvariablen t kann das Signal auch zeitdiskret mit dem Zeitindex $0 \leq k \leq K$ beschrieben werden.

Der Signalverlauf p wird mit einem sich bewegenden Hanning-Fenster (typischerweise 10 ms breit entsprechend N diskreten Werten k) und einer Überlappung von 50% spektral analysiert, was die im linken unteren Diagramm von Figur 1 gezeigten Kurzzeitfrequenzspektren liefert. Dabei wird in jedem Zeitfenster zur Zeit $t_l$ (bzw. diskret $k_l$) eine Fourier-Transformation (bzw. eine Diskrete Fourier-Transformation DFT) berechnet, wobei im linken unteren Diagramm nur deren Beträge (diskret: $|P(n, l)|$) eingetragen sind. Für jede Frequenzlinie f (bzw. diskret jede Frequenz n; siehe horizontale Linie im Diagramm unten links), welche nachfolgend als "Trägerfrequenz" bezeichnet wird, stellen die einzelnen Anteile in den verschiedenen Kurzzeitfrequenzspektren einen zeitlichen (unterabgetasteten) Verlauf dar, d.h. ein Trägersignal. Dieses Trägersignal kann dann einer zweiten Fourier-Analyse unterworfen werden, deren Ergebnis für jedes Trägersignal zu jeder Trägerfrequenz f (bzw. n) im Diagramm rechts unten von Figur 1 dargestellt ist. Auf diese Weise wird das gesamte Modulationsfrequenzspektrum (diskret: $P_m(n, m)$) erhalten. Aus diesem ist dann ersichtlich, mit welcher Amplitude der ursprüngliche Signalverlauf bei der jeweiligen Trägerfrequenz n moduliert ist.

Da der Amplitude des Modulationsfrequenzspektrums selber nicht entnommen werden kann, wie stark das Signal bei der Trägerfrequenz tatsächl ich moduliert ist, wird der Modulationsindex $P_{mi}(n, m)$ berechnet. Hierzu wird zusätzlich die Amplitude der entsprechenden Trägerfrequenz berücksichtigt. Zur Bildung des Modulationsindex $P_{mi}(n, m)$ wird jede einzelne Frequenzlinie $n$ der entsprechenden Modulationsfrequenzlinie $m$ durch die zugehörige Modulationsamplitude der Modulationsfrequenzlinie an der Stelle $m = 0$ dividiert. Da diese Modulationsfrequenz genau der Frequenzlinie $n$ der Trägerfrequenz entspricht, wird somit der Grad der Modulation berechnet.

Durch ein Modulationsfilter können nun gezielt Werte im Modulationsfrequenzspektrum verändert werden, wodurch Modulationen bei definierten Träger- und Modulationsfrequenzen sowohl abgeschwächt als auch angehoben werden können. Eine entsprechende zweimalige Anwendung von Rück-DFTs liefert schließlich das modulationsgefilterte Zeitsignal.

Die einzelnen Verarbeitungsschritte werden im Folgenden dargestellt.

**Das Modulationsfrequenzspektrum**

Ausgangspunkt des Modulationsfrequenzspektrums ist der aus der ursprünglich zeitlichen Folge $p(k)$ berechnete zeitliche Verlauf der Kurzzeit-DFT.

$$P(n,l)\bigg|_{l=0}^{L} = \sum_{k=lN(1-O)}^{lN(1-O)+(N-1)} p(k) \cdot w(k - lN(1-O)) \cdot e^{-j\frac{2\pi kn}{N}} \bigg|_{l=0}^{L} \qquad (1)$$

Für die Fahrsituation Leerlauf beispielsweise sind hierbei folgende Randbedingungen für die gewählten Fensterlängen $N$ und Overlapwerte $O$ zu beachten:

- Die Gesamtlänge der zeitlichen Folgen, in denen Meßsignale als weitgehend stationär betrachtet werden können, beträgt $T \cong 3$ s. Dies führt bei einer Abtastfrequenz von $f_A$ = 44100 Hz zu maximal $K \cong T \cdot f_A \cong 132300$ zeitlichen Stützstellen, die für eine Modulationsanalyse zur Verfügung stehen.

- Das Zeitfenster der gleitenden Kurzzeit-DFT darf eine Länge von $t_{max} \cong 15$ ms nicht überschreiten, da die perzeptionsrelevante Hüllkurve genau genug abgetastet werden muß, d.h., das Fenster muß mindestens einmal zwischen den Vorgang von zwei Zylinderfeuerungen platziert sein, ohne deren Anteile zu erfassen.

- Das Fenster darf eine Länge von $t_{min} \cong 10$ ms (entsprechend einer spektralen Auflösung von $\Delta f_s$ = 100 Hz) nicht unterschreiten, damit die spektrale Auflösung der später als Trägerfrequenz betrachteten Spektrallinien ausreichend hoch ist.

- Der Overlapwert $O$ muß mindestens so groß gewählt werden, daß die Anzahl der zeitlichen Stützstellen, welche die neue Abtastfrequenz $f_A'$ bestimmen, so hoch ist, daß die höchst möglichen Modulationsfrequenzen abgebildet werden.

Eine Länge von $N = 512$ (entsprechend einer zeitlichen Länge von 11,6 ms) für das gleitende Hanning-Fenster $w(k)$ erfüllt z.B. zum einen die maximale zeitliche Länge, die das Fenster aufweisen darf, und liefert andererseits eine

spektrale Auflösung von $\Delta f_s = f_A / N = 86$ Hz, die als ausreichend hoch betrachtet werden kann.

Heuristische Untersuchungen zeigen weiterhin, daß die höchste zu erwartende Modulationsfrequenz durch die 4,5te Motorordnung bestimmt wird und folglich mit $f_m = 67,5$ Hz angegeben werden kann. Ein Overlapwert von $O$ = 0,5 ist folglich ausreichend groß. Die hierbei erreichte zeitliche Auflösung von $T_L = N (1 - O) / f_A = 5,8$ ms führt zu einer neuen Abtastfrequenz von $f_A' = 172,4$ Hz, so daß Spektralanteile bis maximal zu $f_A' / 2 = 86,2$ Hz ohne Unterabtastung erfaßt werden. Damit ist sichergestellt, daß alle physikalisch vorhandenen Modulationen ohne Informationsverlust analysiert werden können.

Die Betragsbildung der Kurzzeitspektren liefert zunächst Gl. (2)

$$\left| P(n,l) \right| = \left| \sum_{k=lN(1-O)}^{lN(1-O)+N-1} p(k) \cdot w(k - lN(1-O)) \cdot e^{-\frac{j2\pi kn}{N}} \right| \qquad (2)$$

Das gleitende Hanning-Fenster führt somit zu $L + 1$ Spektren mit jeweils $N$ spektralen Stützstellen.

Figur 2 zeigt im oberen Teil anhand einer stilisierten Darstellung den Aufbau des zeitlichen Verlaufes der Kurzzeitspektren, während der untere Teil von Figur 2 diesbezüglich den real berechneten zeitlichen Verlauf für ein Kunstkopf-Meßsignal $p(k)$ darstellt.

Nun wird jede einzelne Frequenzlinie $n$ des gleitenden Fensters $l$= 0, 1, 2, ... , $L$ als Trägersignal betrachtet, über deren zeitlichen Verlauf erneut eine DFT berechnet wird. Das Trägersignal selber wird zuvor mit einem Hanning-Fenster $w(l)$ der Länge $M$ gewichtet, so daß folglich Gl. (3) für das daraus entstehende Modulationsspektrum geschrieben werden kann:

$$P_m(n,m) \bigg|_{n=0}^{N} = \sum_{l=0}^{M-1} \left| P(n,l) \right| \cdot w(l) \cdot e^{-j\frac{2\pi l m}{M}} \bigg|_{n=0}^{N} \qquad (3)$$

Hierbei gilt für die Anzahl der Modulationsfrequenzstützstellen $M \leq L + 1$, wobei die erforderliche Stützstellenzahl $M$ die notwendige Länge der zu analysierenden Zeitfunktion bestimmt. Weist das Hanning-Fenster $w(l)$ z. B. die oben genannte Fensterlänge von $M = 512$ Werten auf, so wird bei einer zeitlichen Auflösung von $T_L = 5,8$ ms ein gemessenes Zeitsignal $p(k)$ der Länge $t = M \cdot T_L$ mit $t = 2,97$ s analysiert.

Da die Modulationsfrequenzen im Vergleich zur Signalfrequenz naturgemäß wesentlich niederfrequenter sind, ist weiterhin darauf zu achten, daß die spektrale Auflösung den physikalischen Gegebenheiten entsprechend fein genug ist. Die spektrale Auflösung der Modulationsanalyse ergibt sich hier mit $\Delta f_m = f_A'/ M$ und $f_A'= 1 / T_L$ zu

$$\Delta f_m = \frac{1}{T_L \cdot M} = \frac{f_A}{N \cdot (1 - O) \cdot M} \qquad (4)$$

Für die oben genannten Beispielwerte (Analyselänge T = 3 s) ergibt sich somit eine spektrale Auflösung der Modulationsfrequenz von $\Delta f_m = 0,336$ Hz. Bei Fahrzeuginnengeräuschen entspricht die niedrigste Modulationsfrequenz, die von Interesse ist, der halben Motorordnung, was im Leerlauf etwa einer Modulationsfrequenz von $f_m = 7,5$ Hz entspricht. Die obige Auflösung ist somit ausreichend fein.

Die Berechnung von $N$ DFTs jeweils über die $L + 1$ Stützstellen mit der Abtastfrequenz $f_A'$ führt zu einem Modulationsfrequenzspektrum, welches $M$ Stützstellen gemäß Gl. (5) aufweist:

$$\left| P_m(n,m) \right| = \left| \sum_{l=0}^{M-1} \left| P(n,l) \right| \cdot w(l) \cdot e^{-\frac{j2\pi l m}{M}} \right| \qquad (5)$$

Die maximale bestimmbare Modulationsfrequenz ergibt sich zu

$$f_{m,max} = \frac{M}{2} \cdot \Delta f_m = \frac{f_A}{(N \cdot 2 \cdot (1 - O))} \tag{6}$$

Bei einer Leerlaufdrehzahl von $n_0$ = 900 1/min und obigen Parametern ist $f_{m,max}$ = 86 Hz. Die höchste dargestellte Motorordnung errechnet sich anhand von $mo_{max} = f_{m,max} \cdot 60 / n_0$ zu $mo_{max}$ = 5,7.

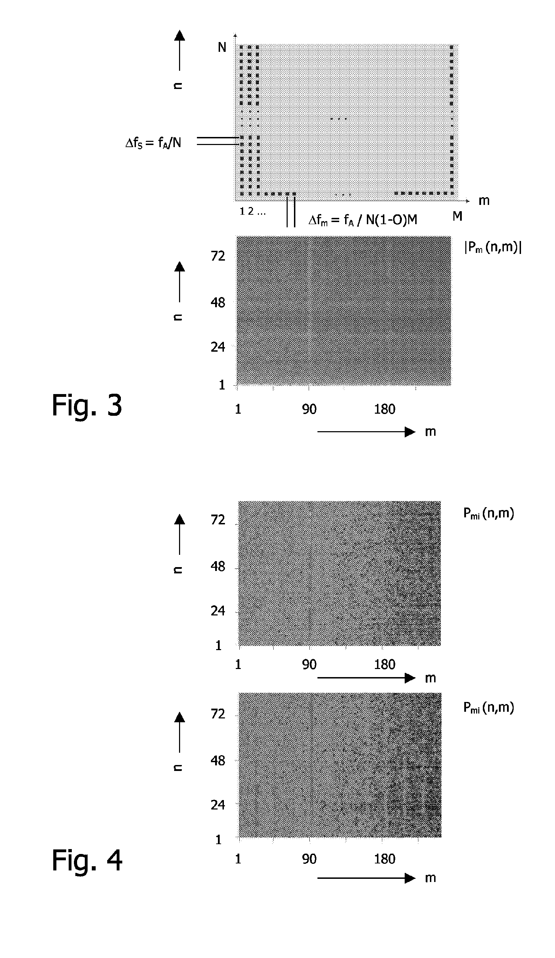

Figur 3 zeigt im oberen Teil anhand einer stilisierten Darstellung den Aufbau des Modulationsfrequenzspektrums, während im unteren Teil ein real berechnetes Modulationsfrequenzspektrum des Kunstkopf-Meßsignals $p(k)$ dargestellt ist.

**Der Modulationsindex**

Der Modulationsindex gibt an, wie stark die jeweilige Trägerfrequenz bei den einzelnen Modulationsfrequenzen moduliert ist, und liefert damit ein Maß, welches die Ausgeprägtheit der zeitlichen Struktur beschreibt. Der Betrag des Modulationsfrequenzspektrums wird hierzu auf die beim Gleichanteil des Modulationsfrequenzspektrums auftretenden Amplituden bezogen, d.h. in Gl. (5) wird $m$ = 0 gesetzt und der dabei entstehende Term als Divisor in Gl. (7) eingesetzt.

$$P_{mi}(n,m)\Big|_{n=0}^{N} = 2\,\frac{\left|P_m(n,m)\right|}{\left|P_m(n,0)\right|} = 2\,\frac{\left|\sum_{l=0}^{M-1}\left|P(n,l)\right| \cdot w(l) \cdot e^{-j\frac{2\pi lm}{M}}\right|}{\left|\sum_{l=0}^{M-1}\left|P(n,l)\right| \cdot w(l)\right|}\Bigg|_{n=0}^{N} \tag{7}$$

Figur 4 zeigt den real berechneten Modulationsindex eines schwach modulierten Kunstkopfmeßsignals $p(k)$ (oben) und eines stärker modulierten Kunstkopfmeßsignals (unten).

Anhand des Modulationsindex werden nun die charakteristischen Eigenschaften des Dieselnagelns deutlich.

Das Dieselnageln ruft aufgrund der von Zylinder zu Zylinder auftretenden, charakteristischen Explosionen eine Modulation mit der halben Motorordnung (hier $f_m$ = 7,5 Hz) und deren Vielfachen hervor. Grund hierfür sind die alle zwei Umdrehungen der Kurbelwelle auftretenden, charakteristischen 4er Muster (Periode $T_{4z}$) der Zylinderexplosionen.

**Narrow Band Modulation Filter (NBMF)**

Die vorstehend beschriebene Technik kann derart erweitert werden, daß eine Filterung im Modulationsbereich möglich wird. Im Gegensatz zur üblicherweise verwendeten Technik der Filterung im Frequenzbereich bleibt hier das mittlere Spektrum erhalten, es können jedoch gezielt Modulationen und damit die Zeitstruktur verändert werden.

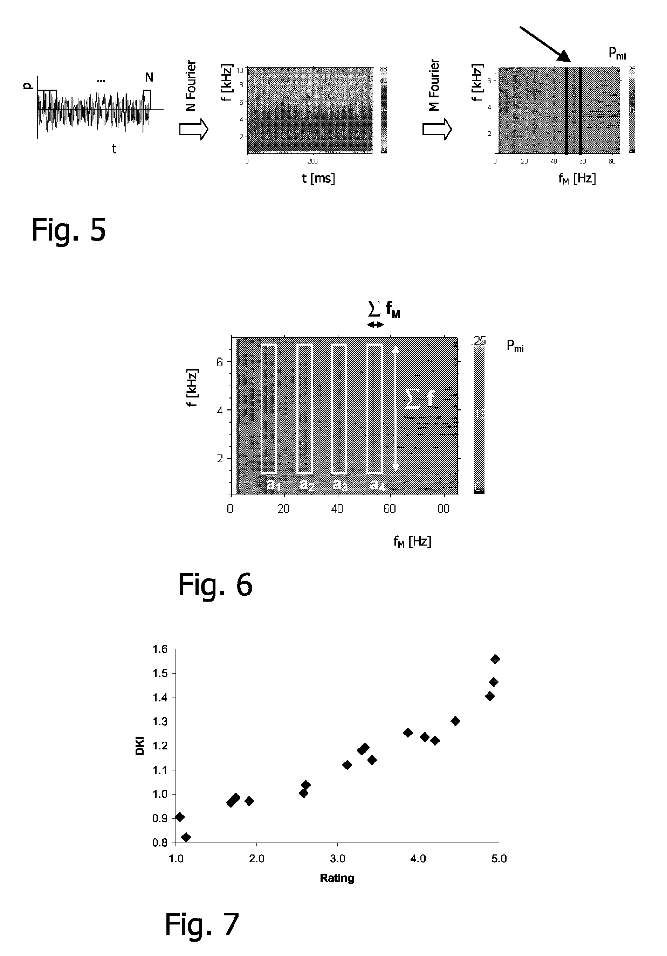

Das Modulationsfilter wird direkt auf den Betrag des Modulationsfrequenzspektrums entsprechend Gl. (5) angewandt. Der Vorteil der hier verwendeten Narrow Band Modulation Analysis besteht darin, daß das Filter in Abhängigkeit von der Trägerfrequenz und der Modulationsfrequenz festgelegt werden kann. So ist es z. B. möglich, Modulationen bei bestimmten Motorordnungen über einen bestimmten Frequenzbereich zu filtern, während die übrigen Modulationen unverändert bleiben. Figur 5 zeigt dies schematisiert. Das Filter selbst verändert direkt den Betrag des Modulationsfrequenzspektrums als Funktion der Modulationsfrequenz und der Trägerfrequenz. Eine beispielhafte Implementierung wird im Folgenden vorgestellt.

Das Verfahren erfordert zunächst die Berechnung des Modulationsfrequenzspektrums, wobei jedoch folgende Zusätze zu beachten sind: bei der Berechnung des Spektrogramms entsprechend Gl (1) wird die zu dem komplexen Spektrogramm gehörende Originalphase $\varphi$ für die spätere Resynthese gespeichert, ebenso wie bei der Berechnung des Modulationsfrequenzspektrums die Original-Modulationsphase $\varphi_m$.

Für das Modulationsfilter wird zunächst der Bereich der Trägerfrequenzen $f_f$ und der Modulationsfrequenzen $f_{f,m}$ und der zugehörigen Indices $n_f$ und $m_f$ festgelegt, auf den das Filter angewandt werden soll:

$$f_u \leq f_f \leq f_o \quad \Rightarrow \quad n_u \leq n_f \leq n_o$$
$$f_{m,u} \leq f_{f,m} \leq f_{m,o} \quad \Rightarrow \quad m_u \leq m_f \leq m_o \tag{8}$$

Das Filter kann prinzipiell auf einen beliebigen Bereich sowohl von Trägerfrequenzen als auch von Modulationsfrequenzen angewandt werden, bei Dieselgeräuschen bietet sich jedoch die Filterung bei Vielfachen der halben Motorordnung an. Ein typischer Bereich für eine Filterauslegung ist so der Trägerfrequenzbereich von 400 Hz bis 3 kHz und eine Modulationsbreite von 1,68 Hz, was bei den oben beschriebenen Parametereinstellungen einer Stützstellenzahl von $m$=5 Punkten entspricht.

Das Filter verändert nun den Betrag des Modulationsfrequenzspektrums innerhalb des oben definierten Bereiches wie folgt:

$$\left| P_{m,f}(n,m) \right| = \left| P_m(n,m) \right| \cdot (1 - A(m)) \quad \textit{für } n \in n_f, m \in m_f$$
$$\left| P_{m,f}(n,m) \right| = \left| P_m(n,m) \right| \qquad \textit{für } n \notin n_f, m \notin m_f \tag{9}$$

Der Faktor $A(m)$ bestimmt hierbei die Stärke der Filterung. Er wird aus einer Konstante $A$ un d einem Hanning-Fenster der Breite der zu filternden Modulationen berechnet, so daß die maximale Abschwächung in der Mitte des zu filternden Modulationsbereiches auftritt und zu den Seiten hin abnimmt. $A(m)$ wird definiert als

$$A(m) = A \cdot w(m) \tag{10}$$

Als Standardwert hat sich ein Faktor von $A$=0,75, demnach eine Abschwächung der Modulation um 75%, bewährt. Wird $A$ negativ gesetzt, so bedeutet dies eine Verstärkung der Modulation und somit eine Verstärkung der impulshaften Anteile im Geräusch (z. B. des Nagelns) eines Dieselfahrzeugs.

Im Prinzip kann in einem Verarbeitungsschritt eine beliebige Anzahl von Filtern parallel angewandt werden, so daß sowohl mehrere Motorordnungen oder unterschiedliche Trägerfrequenzbereiche gleichzeitig gefiltert werden können.

Aus dem gefilterten Modulationsfrequenzspektrum wird anschließend in einem zweistufigen Prozeß das gefilterte Zeitsignal berechnet.

In der ersten Stufe wird das Modulationsfrequenzspektrum durch inverse gleitende Kurzzeit-DFT-Transformationen wieder in ein Spektrogramm zurückgewandelt. In der zweiten Stufe wird das Spektrogramm durch inverse gleitende Kurzzeit-DFT-Transformationen und das Overlap-and-add-Verfahren in ein Zeitsignal zurücktransformiert. Bei beiden Transformationen werden die originalen Phasen hinzugezogen, die bei den Hintransformationen abgespeichert wurden.

Bei einer DFT werden bekanntlich Frequenzlinien von der Frequenz $f$=0 Hz bis zur Abtastfrequenz $F_a$ berechnet, wobei nur die Frequenzen bis zur halben Abtastfrequenz (der sog. Nyquistfrequenz $F_n = F_a/2$) weiter ausgewertet werden. Die Frequenzlinien oberhalb der Nyquistfrequenz weisen Werte auf, die dem konjugiert Komplexen entsprechen, wobei die zugehörige Frequenzlinie an der Nyquistfrequenz gespiegelt wird.

Dieser Zusammenhang muß bei den Rücktransformationen berücksichtigt werden, da durch das Modulationsfilter nur der Bereich bis zur Nyquistfrequenz verändert wird. Der Bereich zwischen der Nyquistfrequenz der Modulationsanalyse und der Abtastfrequenz (hier der Zeitachse des Spektrogramms) muß vor der Rücktransformation berechnet werden:

$$P_{m,f}(n,m_1)\Big|_{m_1=M/2+1}^{M} = P^*_{m,f}(n,m_2)\Big|_{m_2=M/2-1}^{0} \tag{11}$$

wobei das komplexe Modulationsfrequenzspektrum aus dem Betrag des Modulationsfrequenzspektrums und der Or-

ginalphase $\varphi_m$ berechnet wird:

$$\left. P_{m,f}(n,m) \right|_{M=0}^{M/2} = \left| P_{m,f}(n,m) \right| \cdot e^{j\varphi_m(n,m)} \Big|_{m=0}^{M/2} \tag{12}$$

Für die Berechnung des Modulationsfrequenzspektrums wurden DFTs auf jede einzelne Trägerfrequenzlinie $n$ über den zeitlichen Verlauf des Betrages des Spektrogramms angewandt. Der Betrag des Spektrogramms wurde folglich als eine reale Zeitfunktion angesehen, so daß der Imaginärteil des komplexen Eingangssignals für die DFTs zu Null gesetzt wurde. Dies muß bei der Rücktransformation entsprechend berücksichtigt werden, der Betrag des gefilterten Spektrogramms $P_f(n,m)$ ist somit identisch mit dem Realteil der inversen DFTs bei jeder Frequenzlinie (also den Index $m$):

$$\left\| P_f(n,m) \right\|_{m=0}^{M} = \operatorname{Re}al\left( InvDFT(P_{m,f}(n,m)) \Big|_{m=0}^{M} \right) \tag{13}$$

Das komplexe gefilterte Spektrogramm wird nun wiederum aus dem nach Gl. (13) berechneten Betrag und der gespeicherten Originalphase berechnet, wobei nur die Werte bis zur Nyquistfrequenz (jetzt der DFT aus dem Zeitbereich in den Frequenzbereich) sinnvoll sind:

$$\left. P_f(n,m) \right|_{n=0}^{N/2} = \left| P_f(n,m) \right| \cdot e^{j\varphi(n,m)} \Big|_{n=0}^{N/2} \tag{14}$$

Der Bereich zwischen der Nyquistfrequenz und der Abtastfrequenz muß auch hier entsprechend Gl. (11) rekonstruiert werden:

$$\left. P_f(n_1,m) \right|_{n_1=N/2+1}^{N} = \left. P^*{}_f(n_2,m) \right|_{n_2=N/2-1}^{0} \tag{15}$$

Das so gewonnene komplexe Spektrogramm kann nun durch Anwendung inverser DFTs auf jedes ursprüngliche Zeitfenster (Index m) und unter Berücksichtigung der zeitlichen Lage der einzelnen Fenster in ein Zeitsignal zurücktransformiert werden. Es ergeben sich Zeitsignalabschnitte $p_{fz}(k',m)$ aus dem Realteil der inversen DFTs:

$$\left. p_{fz}(k',m) \right|_{m=0}^{M} = \operatorname{Re}al\left( InvDFT(P_f(n,m)) \Big|_{m=0}^{M} \right) \tag{16}$$

Diese Zeitsignalabschnitte werden dann unter Berücksichtigung der Überlappung aufeinanderfolgender Abschnitte zum gefilterten Ausgangssignal zusammengefaßt.
Die oben beschriebene Vorgehensweise wird auf jeden im Signal enthaltenen Kanal angewandt, wobei in der Regel die Filter identisch sind. Prinzipiell können die Filter jedoch auch für jeden Kanal anders ausgelegt werden.

**Diesel Knocking Index (DKI)**

Die Narrow Band Modulation Analysis ermöglicht es, perzeptionsrelevante Information über das dieseltypische Geräusch, das Dieselnageln, darzustellen und zu quantifizieren. Das Dieselnageln wird durch das Auftreten von Modulationen bei Vielfachen der halben Motorordnung repräsentiert. Figur 6 zeigt dies beispielhaft für ein Geräusch mit starkem Dieselnageln.

Die Stärke des Dieselnagelns wird durch die Ausprägung der Modulation bei Modulationsfrequenzen, die Vielfachen der halben Motorordnung entsprechen, bestimmt. Wie in dem Beispiel zu erkennen ist, spielen im Wesentlichen die ersten vier halben Ordnungen eine Rolle, höhere Ordnungen sind bei Vierzylindermotoren selten ausgeprägt. Es ist weiterhin zu erkennen, daß die Modulationen über einen bestimmten Bereich von Trägerfrequenzen auftreten und eine bestimmte Breite haben können.

Der dargestellte Modulationsindex zeigt an, wie stark ein Geräusch moduliert ist; dieser liefert jedoch keine Aussage über die Gesamtenergie der Modulation. Da energetisch stärkere Signale, die gleich moduliert sind, eine größere Impulshaftigkeit aufweisen, geht auch der mittlere Pegel der Geräusche mit in die Berechnung des Diesel Knocking Index DKI ein:

$$DKI = \frac{M_{DKI}{}^{c} \cdot L_{fu\text{-}fl}}{N} \tag{17}$$

mit

$$M_{DKI} = \frac{1}{n_o} \sum_{i=0.5}^{O(step=0.5)} w_{eo} \cdot M_{i,o}$$

und

$$M_{i,o} = \frac{\sum\limits_{n_m=n_{m,o}-d_{nm}/2}^{n_m=n_{m,o}+d_{nm}/2} (w_m \cdot \overline{P}_{mi})}{\sum\limits_{n_m=n_{m,o}-d_{nm}/2}^{n_m=n_{m,o}+d_{nm}/2} w_m}$$

dabei sind

    *o = Motorordnung*
    *O = höchste auszuwertende Motorordnung*
    *$d_{nm}$ = Breite des Modulationsfensters*
    *$w_m$ = Modulations - Fensterfunktion*
    *c = Constante gewonnen durch ein Optimalfit*
    *$L_{fu\text{-}fl}$ = A gewichteter Gesamtpegel im Frequenzbereich $f_{L,l} \leq f \leq f_{L,u}$*
    *$n_{fl}$ = Lower Trägerfrequenzgrenze*
    *$n_{fu}$ = UpperTrägerfrequenzgrenze*
    *N = Normalisierungsfaktor*
    *$n_o$ = Anzahl der halben untersuchten Motorordnung O*
    *$n_m$ = Index der Modulationsfrequenz*

Die höchste auszuwertende Motorordnung beträgt bei Fahrzeugen mit Vierzylindermotoren typischerweise *O*=2, bei höheren Zylinderzahlen kann sie entsprechend höher gewählt werden.

Die Breite des Modulationsfensters liefert bei oben genannten Parametern für einen Wert von $d_{nm}$=5 optimale Ergebnisse.

Als Modulationsfensterfunktion $W_m$ wurde für die unten dargestellten Ergebnisse ein Hanning-Fenster benutzt.

Die unteren und oberen Indices $n_{fl}$ und $n_{fu}$ zur Bestimmung des zu berücksichtigenden Trägerfrequenzbereiches wurden so gesetzt, daß Frequenzen zwischen 400 Hz und 3 kHz ausgewertet werden.

Der Pegel $L_{fu\text{-}fl}$ wurde ebenfalls für diesen Frequenzbereich berechnet, aber auch eine Verwendung des uneingeschränkten Gesamtpegels liefert gute Werte.

Ein Beispiel für die Übereinstimmung des DKI mit Beurteilungen des Dieselnagelns durch Versuchspersonen (51 Versuchspersonen) zeigt Figur 7. Die Korrelation liegt hier bei 0,96.

Es ist zu erkennen, daß die Bewertung des Dieselnagelns durch die Versuchspersonen durch den DKI sehr gut repräsentiert wird. Eine Vorhersage der Beurteilung durch den DKI ist somit möglich.

**Instrumentelle Vorhersage der Beurteilung von Dieselnageln**

Die gute Korrelation des DKI mit der Beurteilung durch Versuchspersonen legt die Definition eines quantitativen Zusammenhanges zwischen beiden Größen nahe. Aufgrund dieses Zusammenhanges kann dann in Zukunft die zu erwartende Beurteilung eines Dieselnagelns instrumentell vorhergesagt werden.

In Figur 7 ist zu erkennen, daß der Zusammenhang zwischen dem DKI und der Beurteilung als linear angenommen werden kann. Es wird folglich eine vorhergesagte Beurteilung $R_p$ definiert zu

$$R_p = a \cdot DKI + b \tag{18}$$

wobei *a* und *b* die Koeffizienten eines Polynomfits darstellen und mit einer minimalen Mean-Square-Error Methode bestimmt werden können.

**Patentansprüche**

1. Verfahren zur quantitativen Analyse der Geräusche eines Verbrennungsmotors, insbesondere eines Dieselmotors, **gekennzeichnet durch** die Schritte:

   a) Aufzeichnung des Signalverlaufes p(k), $0 \le k \le K$, des Geräusches über eine vorgegebene Aufzeichnungsdauer K;

   b) Ermittlung von Kurzzeitfrequenzspektren P(n, l) für den gesamten Signalverlauf p(k), $0 \le k \le K$, wobei jedes Kurzzeitfrequenzspektrum die Anteile der Frequenzen n in einem Zeitfenster der Breite N < K bei einem Zeitpunkt $0 \le k_l \le K$, $0 \le l \le L$, wiedergibt;

   c) Ermittlung der Modulationsfrequenzspektren $P_m(n, m)$ zu den Kurzzeitfrequenzspektren P(n, l), wobei jedes Modulationsfrequenzspektrum $P_m(n, m)$ die Anteile der Modulationsfrequenzen m an dem Trägersignal $|P(n, l)|$, $0 \le l \le L$, wiedergibt, das **durch** die betragsmäßigen Anteile der Frequenz n in allen Kurzzeitfrequenzspektren P(n, l) gebildet wird.

2. Verfahren nach Anspruch 1,
   **dadurch gekennzeichnet, daß**
   die Aufzeichnung und Analyse des Signalverlaufes p(k) zeitdiskret erfolgt.

3. Verfahren nach Anspruch 2,
   **dadurch gekennzeichnet, daß**
   die Kurzzeitfrequenzspektren P(n, l) mittels einer diskreten Fourier-Transformation gewonnen werden gemäß der Formel

$$P(n,l)\Big|_{l=0}^{L} = \sum_{k=l\,N\,(1-O)}^{l\,N\,(1-O)+(N-1)} p(k) \cdot w(k - l\,N\,(1-O)) \cdot e^{-j\frac{2\pi kn}{N}} \Big|_{l=0}^{L}$$

wobei $0 \le O \le 1$ den Überlapp der Zeitfenster beschreibt und w eine Fensterfunktion ist, vorzugsweise ein Hanning-Fenster.

4.  Verfahren nach Anspruch 2 oder 3,
    **dadurch gekennzeichnet, daß**
    die Modulationsfrequenzspektren $P_m(n, m)$ durch eine diskrete Fourier-Transformation gewonnen werden gemäß der Formel

$$P_m(n,m)\Big|_{n=0}^{N} = \sum_{l=0}^{M-1}\big|P(n,l)\big| \cdot w(l) \cdot e^{-j\frac{2\pi l\,m}{M}}\Big|_{n=0}^{N}$$

    wobei w eine Fensterfunktion der Breite M ist, vorzugsweise ein Hanning-Fenster.

5.  Verfahren nach Anspruch 4,
    **dadurch gekennzeichnet, daß**
    aus den Modulationsfrequenzspektren $P_m(n ,m)$ ein Modulationsindex $P_{mi}(n, m)$ berechnet wird gemäß

$$P_{mi}(n,m)\Big|_{n=0}^{N} = 2\,\frac{\big|P_m(n,m)\big|}{\big|P_m(n,0)\big|}\,.$$

6.  Verfahren nach Anspruch 5,
    **dadurch gekennzeichnet, daß**
    ein Geräuschindex (DKI) aus den Werten des Modulationsindex $P_{mi}(n, m)$ im Bereich der Modulationsfrequenzen m, die Vielfachen der halben Motorordnung entsprechen, und aus dem mittleren Pegel der Motorgeräusche berechnet wird.

7.  Verfahren nach Anspruch 6,
    **dadurch gekennzeichnet, daß**
    der Geräuschindex (DKI) berechnet wird gemäß der Formel

$$DKI = \frac{M_{DKI}{}^{c} \cdot L_{fu\text{-}fl}}{N}$$

    mit

$$M_{DKI} = \frac{1}{n_o} \sum_{i=0.5}^{O(step=0.5)} w_{eo} \cdot M_{i,o}$$

    und

$$M_{i,o} = \frac{\displaystyle\sum_{n_m=n_{m,o}-d_{nm}/2}^{n_m=n_{m,o}+d_{nm}/2}\big(w_m \cdot \overline{P}_{mi}\big)}{\displaystyle\sum_{n_m=n_{m,o}-d_{nm}/2}^{n_m=n_{m,o}+d_{nm}/2} w_m}$$

dabei sind

o = Motorordnung
O = höchste auszuwertende Motorordnung
$d_{nm}$ = Breite des Modulationsfensters
$w_m$ = Modulations - Fensterfunktion
c = Constante gewonnen durch ein Optimalfit
$L_{fu\text{-}fl}$ = A gewichteter Gesamtpegel im Frequenzbereich $f_{L,l} \leq f \leq f_{L,u}$
$n_{fl}$ = Lower Trägerfrequenzgrenze
$n_{fu}$ = UpperTrägerfrequenzgrenze
N = Normalisierungsfaktor
$n_o$ = Anzahl der halben untersuchten Motorordnung O
$n_m$ = Index der Modulationsfrequenz

**8.** Verfahren nach Anspruch 6 oder 7,
**dadurch gekennzeichnet, daß**
der Geräuschindex (DKI) aufgrund empirischer Daten an eine subjektive Bewertung des Geräusches angepaßt wird.

**9.** Verfahren nach mindestens einem der Ansprüche 1 bis 8,
**dadurch gekennzeichnet, daß**
das Modulationsfrequenzspektrum $P_m(n, m)$ gefiltert wird, und daß das gefilterte Modulationsfrequenzspektrum in einen Signalverlauf rücktransformiert wird.

**10.** Vorrichtung zur quantitativen Analyse der Geräusche eines Verbrennungsmotors, insbesondere eines Dieselmotors, enthaltend eine Datenverarbeitungseinheit mit einem Speicher für einen gemessenen Signalverlauf p(k) des
Geräusches, welche dahingehend ausgebildet ist, ein Verfahren nach mindestens einem der Ansprüche 1 bis 9
auszuführen.

Fig. 1

Fig. 2

$\Delta f_S = f_A/N$

$\Delta f_m = f_A / N(1-O)M$

$|P_m(n,m)|$

**Fig. 3**

$P_{mi}(n,m)$

$P_{mi}(n,m)$

**Fig. 4**

Fig. 5

Fig. 6

Fig. 7

<table>
<tr><td colspan="2">Europäisches<br>Patentamt</td><td>EUROPÄISCHER RECHERCHENBERICHT</td><td colspan="2">Nummer der Anmeldung<br><br>EP 03 10 0787</td></tr>
</table>

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | BODDEN M, HEINRICHS R: "Analysis of the time structure of gear rattle" PROCEEDINGS OF INTERNOISE 99, 2. - 4. Dezember 1999, Seiten 1273-1278, XP002253660 Fort Lauderdale, Florida, USA * Seite 1274, letzter Absatz - Seite 1276, letzter Absatz *<br>--- | 1-6,8,10 | G01H3/08 |
| X | EP 0 718 608 A (SKF ENG & RES CENTRE BV) 26. Juni 1996 (1996-06-26) * Spalte 3, Zeile 4 - Zeile 52 *<br>--- | 1,2,10 | |
| X | PATENT ABSTRACTS OF JAPAN vol. 1999, no. 09, 30. Juli 1999 (1999-07-30) -& JP 11 108806 A (OKI ELECTRIC IND CO LTD), 23. April 1999 (1999-04-23) * Zusammenfassung *<br>----- | 1,2,10 | |
| | | | **RECHERCHIERTE SACHGEBIETE (Int.Cl.7)**<br><br>G01H |

Der vorliegende Recherchenbericht wurde für alle Patentansprüche erstellt

| Recherchenort | Abschlußdatum der Recherche | Prüfer |
|---|---|---|
| DEN HAAG | 5. September 2003 | Häusser, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 03 10 0787

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2003

| Im Recherchenbericht angeführtes Patentdokument | | Datum der Veröffentlichung | Mitglied(er) der Patentfamilie | | Datum der Veröffentlichung |
|---|---|---|---|---|---|
| EP 0718608 | A | 26-06-1996 | NL | 9401949 A | 01-07-1996 |
| | | | DE | 69511229 D1 | 09-09-1999 |
| | | | DE | 69511229 T2 | 20-01-2000 |
| | | | EP | 0718608 A1 | 26-06-1996 |
| | | | JP | 8219873 A | 30-08-1996 |
| | | | US | 5698788 A | 16-12-1997 |
| JP 11108806 | A | 23-04-1999 | KEINE | | |

EPO FORM P0461

Für nähere Einzelheiten zu diesem Anhang : siehe Amtsblatt des Europäischen Patentamts, Nr.12/82